# EUROPÄISCHE PATENTSCHRIFT

(11) **EP 2 040 220 B1**
(45) Veröffentlichungstag und Bekanntmachung des Hinweises auf die Patenterteilung: **02.07.2014**
(21) Anmeldenummer: 07018733.1
(22) Anmeldetag: 24.09.2007
(51) Int. Cl.: G06T 7/00

(54) **Verfahren zur Hinderniserkennung**
Method for detecting obstacles
Procédé destiné à la détection d'obstacles

(43) Veröffentlichungstag der Anmeldung: 25.03.2009
(73) Patentinhaber: Delphi Technologies, Inc., Troy, MI 48007 (US)
(72) Erfinder: Ma, Guanglin, 45143 Essen (DE); Park, Su-Birm, 52457 Aldenhoven (DE); Ioffe, Alexander, 53229 Bonn (DE)
(74) Vertreter: Robert, Vincent

(56) Entgegenhaltungen:
- EP-A- 1 646 008
- MA, GUANGLIN ; PARK, SU-BIRM; IOFFE, ALEXANDER; MULLER-SCHNEIDERS, STEFAN; KUMMERT, ANTON: "A Real Time Object Detection Approach Applied to Reliable Pedestrian Detection" INTELLIGENT VEHICLES SYMPOSIUM, 2007 IEEE, 13. Juni 2007 (2007-06-13), - 15. Juni 2007 (2007-06-15) Seiten 755-760, XP002460337

## Beschreibung

Die Erfindung betrifft ein Verfahren zur Erkennung eines sich im Fahrweg eines beweglichen Trägers wie insbesondere eines Fahrzeuges befindlichen Hindernisses, insbesondere Fußgängers, in der Umgebung im Sichtbereich eines an dem beweglichen Träger angebrachten optischen Sensors.

Verfahren dieser Art sind bekannt. Sie dienen insbesondere dazu, im Straßenverkehr Kollisionen mit Fußgängern zu verhindern oder gegebenenfalls noch rechtzeitig geeignete Sicherheitsmaßnahmen ergreifen zu können.

Bekannt ist die Erkennung von Hindernissen mit Hilfe von Sensoren, z. B. Beschleunigungssensoren und/oder Kontaktsensoren, die im Bereich einer Stoßstange eines Kraftfahrzeugs angeordnet sind. Derartige Sensoren ermöglichen jedoch eine Erkennung von Hindernissen erst dann, wenn sich diese in unmittelbarer Nähe des Fahrzeugs befinden oder eine Kollision bereits erfolgt ist.

Allgemein bekannt ist auch der Einsatz von Kameras in Kraftfahrzeugen, beispielsweise um als Einparkhilfe die Umgebung des Kraftfahrzeugs auf einem von dem Fahrer des Kraftfahrzeugs einsehbaren Display abzubilden.

Als problematisch erweisen sich bei dem Einsatz von Kameras grundsätzlich jedoch die Menge der zu verarbeitenden Bilddaten sowie die automatische Auswertung der erzeugten Bilder. Dies gilt insbesondere dann, wenn die Auswertung des Bildmaterials nicht nur automatisch, sondern auch noch besonders schnell zu erfolgen hat, wie es beispielsweise in einem Fahrzeugsicherheitssystem zum Schutz von Personen bei einem Zusammenstoß mit dem Kraftfahrzeug erforderlich ist.

Aus der EP 1 646 008 A1 ist auch bereits ein Verfahren zur Erkennung eines sich in einem Fahrweg eines Kraftfahrzeugs befindlichen Hindernisses, insbesondere einer Person, bekannt, bei dem mittels einer Kamera ein erstes Bild und zeitlich dazu beabstandet ein zweites Bild der in Fahrtrichtung liegenden Umgebung des Kraftfahrzeugs aufgenommen werden, ein erstes transformiertes Bild durch Projektion des ersten aufgenommenen Bildes aus der Kameraebene in die Ebene des Erdbodens und ein zweites transformiertes Bild durch Projektion des zweiten aufgenommenen Bildes aus der Kamerabildebene in die Ebene des Erdbodens erzeugt werden, ein Differenzbild aus dem ersten und zweiten transformiert Bild ermittelt wird und durch Auswertung des Differenzbildes ermittelt wird, ob sich ein Hindernis im Fahrweg des Fahrzeugs befindet.

Dieses bekannte Verfahren hat sich in der Praxis bewährt. Aufgrund der geometrischen Gegebenheiten können hier allerdings nur Hindernisse bzw. Teile von Hindernissen oberhalb der Bodenebene erfasst werden, die unter dem Horizont liegen. In vielen Fällen möchte man jedoch die gesamte Kontur, das heißt sowohl den unterhalb des Horizontes als auch den oberhalb des Horizontes liegenden Teil des Hindernisses erfassen, um eine zuverlässigere Hinderniserfassung zu gewährleisten.

Der Erfindung liegt die Aufgabe zugrunde, ein Verfahren anzugeben, das auf einfache und zuverlässige Weise eine möglichst schnelle, zumindest im Wesentlichen vollständige Erkennung eines sich in einem Fahrweg eines beweglichen Trägers wie insbesondere eines Fahrzeugs befindlichen Hindernisses, insbesondere Fußgängers, ermöglicht. Dabei soll insbesondere sichergestellt sein, dass sowohl der Bereich unterhalb als auch der Bereich oberhalb des Horizontes erfasst wird.

Gemäß der Erfindung wird diese Aufgabe gelöst durch ein Verfahren zur Erkennung eines sich im Fahrweg eines beweglichen Trägers wie insbesondere eines Fahrzeuges befindlichen Hindernisses, insbesondere Fußgängers, in der Umgebung im Sichtbereich eines an dem beweglichen Träger angebrachten optischen Sensors, bei dem mittels des optischen Sensors zu einem ersten Zeitpunkt ein erstes Bild und zu einem späteren zweiten Zeitpunkt ein zweites Bild aufgenommen werden, durch eine Projektion eines unterhalb des Horizontes liegenden Bildabschnitts des ersten aufgenommenen Bildes aus der Bildebene des optischen Sensors in die Bodenebene ein erstes transformiertes unteres Teilbild erzeugt wird, durch eine Projektion eines oberhalb des Horizontes liegenden Bildabschnitts des ersten aufgenommenen Bildes aus der Bildebene des optischen Sensors in eine zur Bodenebene parallele virtuelle Ebene oberhalb des Horizontes ein erstes transformiertes oberes Teilbild erzeugt wird, durch eine Projektion eines unterhalb des Horizontes liegenden Bildabschnitts des zweiten aufgenommenen Bildes aus der Bildebene des optischen Sensors in die Bodenebene ein zweites transformiertes unteres Teilbild erzeugt wird, durch eine Projektion eines oberhalb des Horizontes liegenden Bildabschnitts des zweiten aufgenommenen Bildes aus der Bildebene des optischen Sensors in eine zur Bodenebene parallele virtuelle Ebene oberhalb des Horizontes ein zweites transformiertes oberes Teilbild erzeugt wird, ein unteres Differenzteilbild aus dem ersten und zweiten transformierten unteren Teilbild ermittelt wird, ein oberes Differenzteilbild aus dem ersten und zweiten transformierten oberen Teilbild ermittelt wird und durch Auswertung des unteren Differenzteilbildes und des oberen Differenzteilbildes ermittelt wird, ob sich ein Hindernis im Fahrweg des beweglichen Trägers befindet.

Aufgrund dieser Ausbildung ist nicht nur eine frühzeitige und schnelle Erkennung eines jeweiligen sich im Fahrweg des beweglichen Trägers bzw. Fahrzeugs befindlichen Hindernisses gewährleistet, es ist auch sichergestellt, dass nicht nur der zwischen der Bodenebene und dem Horizont befindliche Bereich, sondern gleichzeitig auch noch der Bereich oberhalb des Horizontes erfasst wird, wodurch die Zuverlässigkeit der Hinderniserfassung weiter erhöht wird. Eventuelle Hindernisse werden zuverlässig und schnell also insbesondere auch in dem Bereich zwischen dem Horizont und der darüberliegenden virtuellen Ebene erfasst.

Zudem wird mit der inversen perspektivischen Abbildung, das heißt Projektion von der Bildebene in die Bodenebene mit anschließender Rückprojektion im Vergleich mit einer Kantenextraktion der Vorteil erzielt, dass Hintergrundinformationen zumindest im Wesentlichen eliminiert werden.

Die Ermittlung von Hindernissen anhand von Differenzbildern ermöglicht die Verarbeitung und Auswertung von Bildern, die über keine räumliche Information verfügen. Dies erlaubt die Aufnahme der Bilder mittels einer Monokamera, die im Vergleich zu beispielsweise einer Stereokamera bei gleicher Bildgröße und Auflösung wesentlich kleinere Datenmengen erzeugt. Die Bilder einer Monokamera lassen sich somit nicht nur besonders schnell auswerten, sie erfordern auch eine geringere Rechenleistung.

Das Differenzbild wird nicht direkt aus den durch den optischen Sensor, insbesondere Kamera, aufgenommenen Bildern, das heißt den Originalbildern, sondern aus transformierten Bildern ermittelt, die durch eine Projektion der Bildgegenstände aus der Bildebene des optischen Sensors in die Ebene des Erdbodens erzeugt wurden.

Durch die Projektion der durch den optischen Sensor aufgenommenen Bilder auf den Erdboden wird aus einem rechteckigen Bildformat ein trapezförmiges Bildformat, wobei die kurze Parallelseite des Trapezes den träger- bzw. fahrzeugnahen Bildbereich und die lange Parallelseite des Trapezes den träger- bzw. fahrzeugfernen Bildbereich begrenzt.

Die Bildtransformation führt zu einer korrekten, das heißt im Wesentlichen verzerrungsfreien Abbildung des Erdbodens in dem transformierten Bild, wohingegen Bildgegebenstände, wie beispielsweise Fußgänger, die sich in Wirklichkeit vom Erdboden abheben und zum Beispiel senkrecht dazu erstrecken, in dem transformierten Bild verzerrt und insbesondere keilförmig dargestellt werden.

Durch die selektive Verzerrung von Bildgegebenständen, die nicht dem Erdboden zuzuordnen sind, lassen sich Bildgegenstände, die als mögliches Hindernis für den Träger bzw. Kraftfahrzeug in Betracht kommen, besonders gut von solchen, die nicht sicherheitsrelevant sind, unterscheiden. Dies ermöglicht eine besonders zuverlässige Erkennung von Hindernissen, insbesondere von Fußgängern.

Bei der Auswertung eines jeweiligen aus zwei zeitlich zueinander beabstandeten Bildern ermittelten Differenzbildes wird der Effekt ausgenutzt, dass sich die Abbildung eines Objektes, welches dem Fahrzeug näher ist, bei sich bewegendem Fahrzeug stärker verändert und insbesondere schneller größer wird, als ein Objekt, welches vom Fahrzeug weiter entfernt ist. Auf diese Weise kann ein sich im Bildvordergrund befindliches Objekt von beispielsweise einem sich im Bildhintergrund befindlichen Objekt unterschieden und gegebenenfalls als Hindernis identifiziert werden.

Wie bereits erwähnt, wird ein jeweiliges als Hindernis eingestuftes Objekt bevorzugt wieder in die Bildebene des optischen Sensors rücktransformiert.

Als optischer Sensor kann beispielsweise eine Kamera, insbesondere Videokamera, verwendet werden. Bevorzugt wird als optischer Sensor eine Monokamera eingesetzt.

Zweckmäßigerweise werden bei der Ermittlung der Differenzteilbilder aus den jeweiligen ersten und zweiten transformierten Teilbildern die Trägerbewegung, insbesondere Trägergeschwindigkeit und/oder Fahrtrichtungs-änderung, und die Zeitspanne zwischen dem ersten und dem zweiten Aufnahmezeitpunkt berücksichtigt. Auf diese Weise wird einer Änderung der Blickrichtung des optischen Sensors bei einer Bewegung des Trägers Rechnung getragen. Dies führt zu besser vergleichbaren transformierten Bildern, wodurch letztlich die Zuverlässigkeit einer korrekten Erkennung eines Hindernisses erhöht wird.

Wie bereits erwähnt, kann es sich bei dem Träger insbesondere um ein Kraftfahrzeug handeln.

Bevorzugt wird die Trägerbewegung durch Translation und Rotation des ersten transformierten unteren Teilbildes und des zweiten transformierten unteren Teilbildes relativ zueinander sowie durch Translation und Rotation des ersten transformierten oberen Teilbildes und des zweiten transformierten oberen Teilbildes relativ zueinander berücksichtigt. Dies ermöglicht eine korrekte Positionierung zeitlich beabstandeter transformierter Bilder relativ zueinander und somit einen optimalen Vergleich der transformierten Bilder.

Im Ergebnis weist das jeweilige Differenzbild einen maximalen Kontrast zwischen sich nicht wesentlich ändernden Bildgegenständen wie zum Beispiel einem in Fahrtrichtung liegenden Straßenabschnitt und schnell größer werdenden Bildgegenständen auf. Das transformierte Abbild eines Objektes, welches in Wirklichkeit über den Erdboden hinausragt, lässt sich somit noch besser vom Untergrund unterscheiden. Dadurch ist eine noch zuverlässigere Erkennung von Hindernissen möglich. Mit einer entsprechenden Translation und Rotation kann insbesondere erreicht werden, dass jeweils gleiche Ausschnitte der Fahrzeugumgebung in Deckung gebracht werden. Dadurch wird sichergestellt, dass bei der Ermittlung des jeweiligen Differenzbildes die Differenz der Grauwerte von solchen Bildpunkten gebildet wird, die zumindest annähernd gleichen Orten der Fahrzeugumgebung entsprechen.

Bildpunkte von solchen Objekten, die sich vom ersten transformierten Bild zum zweiten transformierten Bild nicht wesentlich verändert haben, wie zum Beispiel das Abbild einer Straße, werden bei der jeweiligen Differenzbildung also eliminiert und ergeben im Differenzbild einen Grauwert von zumindest annähernd Null. Lediglich die Bildpunkte solcher Objekte, die sich in der näheren Träger- bzw. Fahrzeugumgebung befinden und die über den Erdboden hinausragen und deshalb in den transformierten Bildern verzerrt und insbesondere keilförmig dargestellt sind, können bei sich auf das Objekt zu bewegendem Träger bzw. Fahrzeug nicht in Deckung gebracht werden. Da das Abbild des Objektes bei sich näherndem Träger bzw. Fahrzeug immer größer wird, weisen zumindest die den Randbereich des Objektes im Differenzbild definierenden Bildpunkte einen sich deutlich von Null unterscheidenden Grauwert auf. Dadurch ist ein über den Erdboden hinausragendes Objekt mit noch größerer Sicherheit vom Untergrund unterscheidbar und ein Hindernis noch zuverlässiger ermittelbar.

Bevorzugt wird ein insbesondere keilförmiges Objekt eines jeweiligen Differenzbildes als Hindernis eingestuft. Wie bereits erwähnt, handelt es sich bei einem Objekt des Differenzbildes um ein Objekt, dessen Bildpunkte bei der Differenzbildung nicht eliminiert wurden. Die transformierte Abbildung eines derartigen Objektes muss sich also von einem transformierten Bild zum nächsten ändern, insbesondere vergrößern. Dies ist gerade dann der Fall, wenn es sich hierbei um die Abbildung eines sich in der näheren Umgebung des Trägers bzw. Fahrzeugs befindlichen und über den Erdboden hinausragenden Objektes handelt. Sofern sich dieses Objekt im Fahrweg des Trägers bzw. Kraftfahrzeugs befindet, kann es als ein Hindernis für das Fahrzeug angesehen werden.

Ein als Hindernis eingestuftes Objekt eines jeweiligen Differenzbildes bzw. der Differenzbilder kann in die aufgenommenen Bilder rücktransformiert werden. Dies ermöglicht es, ein als Hindernis eingestuftes Objekt auch in den aufgenommenen Bildern als solches kenntlich zu machen, beispielsweise durch eine entsprechende Einfärbung oder Umrahmung.

Vorteilhafterweise werden durch eine Bildstabilisierung insbesondere durch eventuelle Fahrwegunebenheiten, eine Trägerneigung, Trägervibrationen und/oder dergleichen bedingte Störungen kompensiert. Durch die entsprechende Minimierung des Bildrauschens wird der Kontakt der Differenzbilder weiter erhöht, sodass ein als Hindernis einzustufendes Objekt noch zuverlässiger ermittelbar ist.

Gegenstand der Erfindung ist zudem ein Computerprogramm mit Programmcode-Mitteln, um das vorstehend beschriebene Verfahren durchzuführen, wenn das Programm auf einem Computer oder einer entsprechenden Recheneinheit ausgeführt wird.

Gegenstand der Erfindung ist auch ein Computerprogrammprodukt mit Programmcode-Mitteln, die auf einem computerlesbaren Datenträger gespeichert sind, um das vorstehend beschriebene Verfahren durchzuführen, wenn das Computerprogramm auf einem Computer oder einer entsprechenden Recheneinheit ausgeführt wird.

Unter einem Computer wird hierbei eine beliebige Datenverarbeitungsvorrichtung verstanden, mit der das Verfahren ausgeführt werden kann. Dabei kann eine solche Datenverarbeitungsvorrichtung insbesondere digitale Signalprozessoren und/oder Mikroprozessoren umfassen, mit denen das Verfahren ganz oder in Teilen ausgeführt wird.

Schließlich ist Gegenstand der Erfindung auch eine Vorrichtung zur Erkennung eines sich im Fahrweg eines beweglichen Trägers wie insbesondere eines Fahrzeuges befindlichen Hindernisses, insbesondere Fußgängers, in der Umgebung im Sichtbereich eines an dem beweglichen Träger angebrachten optischen Sensors, mit einer Datenverarbeitungsanlage, die zur Durchführung des vorstehend beschriebenen Verfahrens ausgebildet ist.

## Patentansprüche

1. Verfahren zur Erkennung eines sich im Fahrweg eines beweglichen Trägers wie insbesondere eines Fahrzeuges befindlichen Hindernisses, insbesondere Fußgängers, in der Umgebung im Sichtbereich eines an dem beweglichen Träger angebrachten optischen Sensors, bei dem
mittels des optischen Sensors zu einem ersten Zeitpunkt ein erstes Bild und zu einem späteren zweiten Zeitpunkt ein zweites Bild aufgenommen werden,
durch eine Projektion eines unterhalb des Horizontes liegenden Bildabschnitts des ersten aufgenommenen Bildes aus der Bildebene des optischen Sensors in die Bodenebene ein erstes transformiertes unteres Teilbild erzeugt wird,
durch eine Projektion eines oberhalb des Horizontes liegenden Bildabschnitts des ersten aufgenommenen Bildes aus der Bildebene des optischen Sensors in eine zur Bodenebene parallele virtuelle Ebene oberhalb des Horizontes ein erstes transformiertes oberes Teilbild erzeugt wird,
durch eine Projektion eines unterhalb des Horizontes liegenden Bildabschnitts des zweiten aufgenommenen Bildes aus der Bildebene des optischen Sensors in die Bodenebene ein zweites transformiertes unteres Teilbild erzeugt wird,
durch eine Projektion eines oberhalb des Horizontes liegenden Bildabschnitts des zweiten aufgenommenen Bildes aus der Bildebene des optischen Sensors in eine zur Bodenebene parallele virtuelle Ebene oberhalb des Horizontes ein zweites transformiertes oberes Teilbild erzeugt wird,
ein unteres Differenzteilbild aus dem ersten und zweiten transformierten unteren Teilbild ermittelt wird,
ein oberes Differenzteilbild aus dem ersten und zweiten transformierten oberen Teilbild ermittelt wird und
durch Auswertung des unteren Differenzteilbildes und des oberen Differenzteilbildes ermittelt wird, ob sich ein Hindernis im Fahrweg des beweglichen Trägers befindet.

2. Verfahren nach Anspruch 1,
**dadurch gekennzeichnet,**
**dass** ein jeweiliges als Hindernis eingestuftes Objekt in die Bildebene des optischen Sensors rücktransformiert wird.

3. Verfahren nach Anspruch 1 oder 2,
**dadurch gekennzeichnet,**
**dass** als optischer Sensor eine Kamera, insbesondere Videokamera verwendet wird.

4. Verfahren nach Anspruch 3,
**dadurch gekennzeichnet,**
**dass** als optischer Sensor eine Monokamera verwendet wird.

5. Verfahren nach einem der vorhergehenden Ansprüche,
**dadurch gekennzeichnet,**
**dass** bei der Ermittlung der Differenzteilbilder aus den jeweiligen ersten und zweiten transformierten Teilbildern die Trägerbewegung, insbesondere Trägergeschwindigkeit und/oder Fahrtrichtungsänderung, und die Zeitspanne zwischen dem ersten und dem zweiten Aufnahmezeitpunkt berücksichtigt werden.

6. Verfahren nach einem der vorhergehenden Ansprüche,
**dadurch gekennzeichnet,**
**dass** die Trägerbewegung durch Translation und Rotation des ersten transformierten unteren Teilbildes und des zweiten transformierten unteren Teilbildes relativ zueinander sowie durch Translation und Rotation des ersten transformierten oberen Teilbildes und des zweiten transformierten oberen Teilbildes relativ zueinander berücksichtigt wird.

7. Verfahren nach einem der vorhergehenden Ansprüche,
**dadurch gekennzeichnet,**
**dass** durch eine Bildstabilisierung insbesondere durch eventuelle Fahrwegunebenheiten, eine Trägerneigung, Trägervibrationen bedingte Störungen kompensiert werden.

8. Computerprogramm mit Programmcodemitteln zur Durchführung des Verfahrens nach einem der Ansprüche 1 bis 7, wenn das Computerprogramm auf einem Computer oder einer entsprechenden Recheneinheit ausgeführt wird.

9. Computerprogrammprodukt mit Programmcodemitteln, die auf einem computerlesbaren Datenträger gespeichert sind, zur Durchführung des Verfahrens nach einem der Ansprüche 1 bis 7, wenn das Computerprogramm auf einem Computer oder einer entsprechenden Recheneinheit ausgeführt wird.

10. Vorrichtung zur Detektion eines auf einer Fahrbahn befindlichen Hindernisses, insbesondere Fußgängers, in der Umgebung im Sichtbereich eines an einem beweglichen Träger wie insbesondere einem Fahrzeug angebrachten optischen Sensors, mit einer Datenverarbeitungseinrichtung, die zur Durchführung des Verfahrens nach einem der Ansprüche 1 bis 7 ausgebildet ist.

## Claims

1. A method for detecting an obstacle, in particular a pedestrian, in the travel path of a movable carrier, in particular a vehicle, in the surroundings in the range of view of an optical sensor attached to the movable carrier, wherein
a first image is taken by means of the optical sensor at a first time and a second image is taken at a later second time,
a first transformed lower partial image is generated by projecting an image section below the horizon of the first image taken from the image plane of the optical sensor to the ground plane,
a first transformed upper partial image is generated by projecting an image section above the horizon of the first image taken from the image plane of the optical sensor to a virtual plane parallel to the ground plane,
a second transformed lower partial image is generated by projecting an image section below the horizon of the second image taken from the image plane of the optical sensor to the ground plane,
a second transformed upper partial image is generated by projecting an image section above the horizon of the second image taken from the image plane of the optical sensor to a virtual plane parallel to the ground plane,
a lower differential partial image is determined from the first and the second transformed lower partial images,
an upper differential partial image is determined from the first and the second upper partial images, and
it is determined, by evaluation of the lower differential partial image and the upper differential partial image, whether an obstacle is located in the travel path of the movable carrier.

2. A method according to claim 1,
**characterized in that**
a respective object classified as obstacle is transformed back to the image plane of the optical sensor.

3. A method according to claim 1 or 2,
**characterized in that**
a camera, in particular a video camera, is used as optical sensor.

4. A method according to claim 3,
**characterized in that**
a mono-camera is used as optical sensor.

5. A method according to one of the preceding claims,
**characterized in that**
movement of the carrier, in particular carrier speed and/or change in travel direction, and time period between the first and the second image taking times are taken into consideration in determining the differential partial images from the respective first and second transformed partial images.

6. A method according to one of the preceding claims,
**characterized in that**
movement of the carrier is taken into consideration by translation and rotation of the first transformed lower partial image and of the second transformed lower partial image relative to one another and by translation and rotation of the first transformed upper partial image and of the second transformed upper partial image relative to one another.

7. A method according to one of the preceding claims,
**characterized in that**
interferences caused by road irregularities, carrier inclination or carrier vibrations are compensated by image stabilization.

8. Computer program having program code means for performing the method according to one of the claims 1 to 7 when the computer program is executed on a computer or a suitable computer unit.

9. Computer program product having program code means stored on a computer readable data carrier for performing the method according to one of the claims 1 to 7 when the computer program is executed on a computer or a suitable computer unit.

10. Device for detecting an obstacle, in particular a pedestrian, on a road in the surroundings in the range of view of an optical sensor attached to a movable carrier, in particular a vehicle, having a data processing unit adapted for performing the method according to one of the claims 1 to 7.

## Revendications

1. Procédé pour la reconnaissance d'un obstacle qui se trouve dans le trajet de déplacement d'un porteur mobile, comme en particulier d'un véhicule automobile, en particulier d'un piéton, dans l'environnement dans la zone de vision d'un capteur optique monté sur le porteur mobile, dans lequel
au moyen du capteur optique, on enregistre une première image à un premier instant et une seconde image à un second instant plus tardif,
par une projection d'une portion d'image, située au-dessous de l'horizon, de la première image enregistrée à partir du plan image du capteur optique on génère une première image partielle inférieure transformée dans le plan du sol,
par une projection d'une portion d'image, située au-dessus de l'horizon, de la seconde image enregistrée à partir du plan image du capteur optique on génère une première image partielle supérieure transformée dans un plan virtuel parallèle au plan du sol au-dessus de l'horizon,
par une projection d'une portion d'image, située au-dessous de l'horizon de la seconde image enregistrée à partir du plan image du capteur optique on génère une seconde image partielle inférieure transformée dans le plan du sol,
par une projection d'une portion d'image, située au-dessus de l'horizon, de la seconde image enregistrée à partir du plan image du capteur optique on génère une seconde image partielle supérieure transformée dans un plan virtuel parallèle au plan du sol au-dessus de l'horizon,
on détermine à partir de la première et de la seconde image partielle inférieure transformée une image partielle différentielle inférieure,
on détermine à partir de la première et de la seconde image partielle supérieure transformée une image partielle différentielle supérieure, et
par évaluation de l'image partielle différentielle inférieure et de l'image partielle différentielle supérieure, en détermine si un obstacle se trouve dans le trajet de déplacement du porteur mobile.

2. Procédé selon la revendication 1,
**caractérisé en ce qu'**un objet respectif classé comme obstacle est transformé en retour dans le plan image du capteur optique.

3. Procédé selon la revendication 1 ou 2,
**caractérisé en ce que** l'on utilise à titre de capteur optique une caméra, en particulier une caméra vidéo.

4. Procédé selon la revendication 3,
**caractérisé en ce que** l'on utilise à titre de capteur optique une caméra mono.

5. Procédé selon l'une des revendications précédentes,
**caractérisé en ce que** lors de la détermination des images partielles différentielles à partir de la première et de la seconde image partielle transformée respective, on tient compte du mouvement du porteur, en particulier de la vitesse du porteur et/ou des modifications de la direction de circulation, et de la durée temporelle entre le premier instant d'enregistrement et le second instant d'enregistrement.

6. Procédé selon l'une des revendications précédentes,
**caractérisé en ce que** le mouvement du porteur est pris en compte par translation et rotation de la première image partielle inférieure transformée et de la seconde image partielle inférieure transformée l'une par rapport à fautre ainsi que par translation et rotation de la première image partielle supérieure transformée et de la seconde image partielle supérieure transformée l'une par rapport à fautre.

7. Procédé selon l'une des revendications précédentes,
**caractérisé en ce que** par une stabilisation d'image, on compense des perturbations provoquées en particulier par d'éventuelles inégalités du trajet de déplacement, par une inclinaison du porteur, par des vibrations du porteur.

8. Programme d'ordinateur comprenant des moyens formant code de programme pour la mise en oeuvre du procédé selon l'une des revendications 1 à 7 lorsque le programme d'ordinateur est exécuté sur un ordinateur ou sur une unité de calcul correspondante.

9. Produit de programme d'ordinateur comprenant des moyens formant code de programme qui sont mémorisés sur un support de données lisible à l'ordinateur, pour la mise en oeuvre du procédé selon l'une des revendications 1 à 7 quand le programme d'ordinateur est exécuté sur un ordinateur ou sur une unité de calcul correspondante.

10. Appareil pour la détection d'un obstacle qui se trouve sur une voie de circulation, en particulier d'un piéton, dans l'environnement dans la zone de vision d'un capteur optique monté sur un porteur mobile, comme en particulier un véhicule, comprenant un système de traitement de données qui est réalisé pour la mise en oeuvre du procédé selon l'une des revendications 1 à 7.
